# FASCICULE DE BREVET EUROPEEN

(11) **EP 2 781 440 B1**
(45) Date de publication et mention de la délivrance du brevet: **22.08.2018**
(21) Numéro de dépôt: 14160373.8
(22) Date de dépôt: 17.03.2014
(51) Int. Cl.: B62H 5/00, B62H 3/00

(54) **Système automatique de stockage de cycles et batterie pour un tel système.**
Automatisches System zur Speicherung von Zyklen, und Batterie für ein solches System
Automatic cycle-storage system and battery for such a system

(30) Priorité: 21.03.2013 FR 1352540
(43) Date de publication de la demande: 24.09.2014
(73) Titulaire: JCDecaux SA, 92200 Neuilly-Sur-Seine (FR)
(72) Inventeur: Calle, Eric, 75011 PARIS (FR); Darras, Jacques, 78120 RAMBOUILLET (FR)
(74) Mandataire: Cabinet Plasseraud

(56) Documents cités:
- EP-A2- 0 985 596
- FR-A1- 2 978 414
- JP-A- H10 307 964
- JP-A- 2006 035 911
- JP-A- 2007 331 725

## Description

### DOMAINE DE L'INVENTION

La présente invention est relative aux systèmes automatiques de stockage de cycles et aux batteries pour de tels systèmes.

Plus particulièrement, l'invention concerne un système automatique de stockage de cycles comprenant :
- une pluralité de cycles électriques comportant chacun un moteur électrique et fonctionnant respectivement avec des batteries électriques rechargeables,
- une infrastructure fixe comportant une pluralité de postes de verrouillage sur lesquels peuvent se verrouiller lesdits cycles électriques et au moins un dispositif de commande externe adapté pour sélectivement autoriser le verrouillage et le déverrouillage des cycles électriques sur lesdits postes de verrouillage.

Un système de stockage de cycles tel que décrit ci-dessus peut être utilisé par exemple pour mettre des cycles en libre service à disposition du public, moyennant identification de l'emprunteur du cycle et éventuellement paiement d'une location.

### ARRIERE PLAN DE L'INVENTION

Le document EP-A-1 820 722 décrit un exemple d'un tel système de stockage de cycles en vue de leur location, dans lequel la batterie de chaque cycle est fixée à demeure au cycle et se recharge pendant que le cycle est verrouillé sur la structure d'accueil, ce qui présente l'inconvénient que ladite batterie n'est pas forcément bien rechargée lorsque l'utilisateur suivant emprunte le cycle.

Le document EP-A-985 596 décrit un système de stockage de cycles dont les batteries électriques sont rechargées en station, selon le préambule de la revendication 1. L'emprunt d'un cycle nécessite une carte d'identification de l'utilisateur.

### OBJETS DE L'INVENTION

La présente invention a notamment pour but de faciliter l'emprunt des cycles.

A cet effet, l'invention propose un système automatique de stockage de cycles tel que défini dans la revendication 1.

Grâce à ces dispositions, chaque utilisateur peut utiliser sa propre batterie ou en tout cas une batterie dont il maîtrise la charge, ce qui lui permet d'utiliser un cycle avec une batterie bien chargée. De plus, on évite également, de cette façon, que la batterie ne reste au froid en hiver, ce qui permet d'allonger considérablement la durée de vie de ladite batterie. De plus, l'utilisation de la batterie comme dispositif d'identification de l'utilisateur, en vue d'autoriser ou non l'emprunt d'un cycle, rend le système beaucoup plus pratique pour les utilisateurs, qui n'ont plus besoin d'autres moyens d'identification tels que des cartes d'identification, code ou autre.

Eventuellement, la batterie comporte un dispositif de commutation commandé par l'unité logique de ladite batterie pour sélectivement basculer entre un état de connexion et un état de déconnexion adaptés pour respectivement permettre et interdire au connecteur électrique externe de ladite batterie de décharger de l'énergie électrique, l'unité logique de la batterie communiquant avec l'infrastructure fixe et étant adaptée pour placer le dispositif de commutation en état de déconnexion lorsqu'elle reçoit des informations de blocage de batterie en provenance de ladite infrastructure fixe.

Par ailleurs, l'invention a également pour objet un procédé pour emprunter un cycle, tel que défini dans la revendication 3.

### BREVE DESCRIPTION DES DESSINS

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue schématique en perspective montrant un système automatique de stockage de cycles selon une forme de réalisation de l'invention,
- la figure 2 est un schéma bloc illustrant les composants électriques principaux du système de stockage de cycles de la figure 1,
- la figure 3 est une vue schématique en perspective d'une des batteries utilisables dans le système des figures 1 et 2, avec son chargeur,
- et la figure 4 est une vue schématique en perspective illustrant la batterie connectée au chargeur.

### DESCRIPTION PLUS DETAILLEE

Sur les différentes figures, les mêmes références désignent des éléments identiques ou similaires.

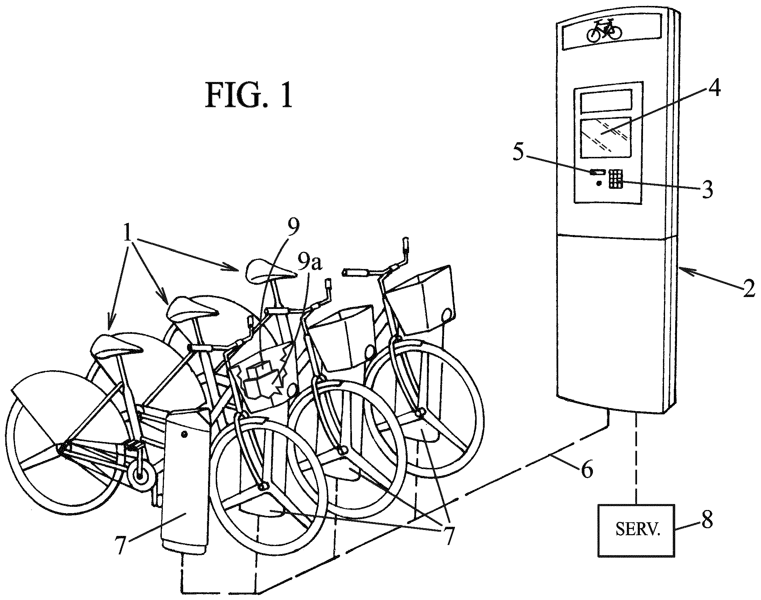

Comme représenté sur la figure 1, la présente invention concerne un système automatique de stockage de cycles 1 tels que notamment des bicyclettes, permettant par exemple de stocker des cycles sur la voie publique de façon à les mettre à la disposition du public, notamment par location.

Ce système automatique de stockage de cycles peut comporter plusieurs stations de stockage de cycles, dont une est représentée sur la figure 1. Ces stations de stockage de cycles peuvent par exemple être réparties en différents endroits d'une même ville. Chaque station de stockage de cycles comprend un poste central de station 2, qui se présente ici sous la forme d'une borne interactive dotée d'une interface utilisateur comprenant par exemple un clavier 3, un écran 4, éventuellement un lecteur de cartes portatives électroniques 5, un dispositif d'impression de tickets, etc. En variante, la borne interactive 2 pourrait ne pas comporter d'interface utilisateur et être une simple passerelle de communication entre la station de stockage de cycles et un serveur central 8 (SERV.).

La borne interactive 2 communique d'une part, avec le serveur central 8 qui gère les abonnements et les locations de cycles, et d'autre part, avec une pluralité de postes de verrouillage 7 qui permettent de verrouiller les cycles pendant leur stockage et qui peuvent par exemple se présenter sous la forme de bornes de verrouillage fixées au sol sur la voie publique et adaptées pour verrouiller chacune un cycle 1.

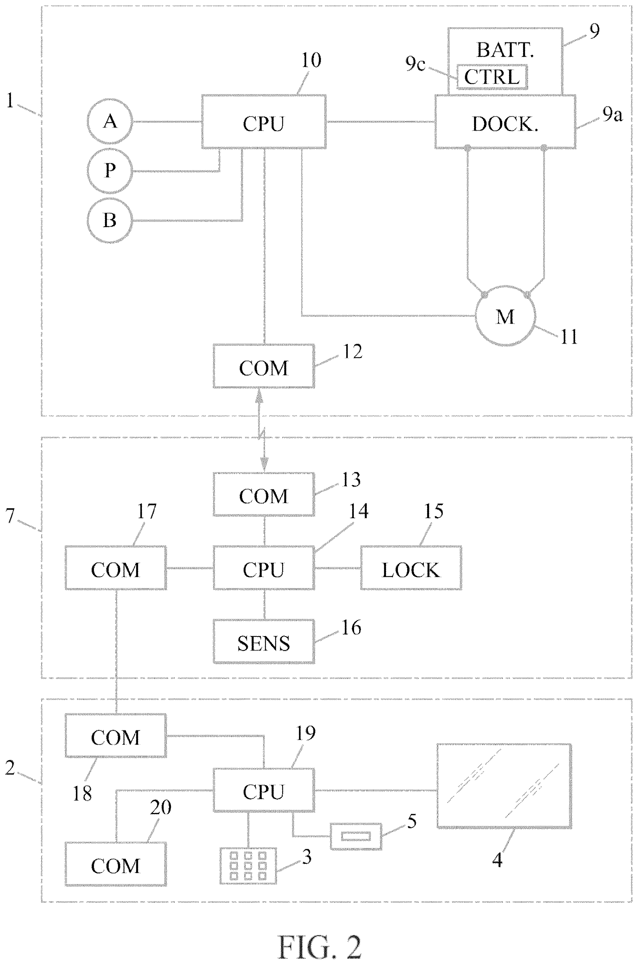

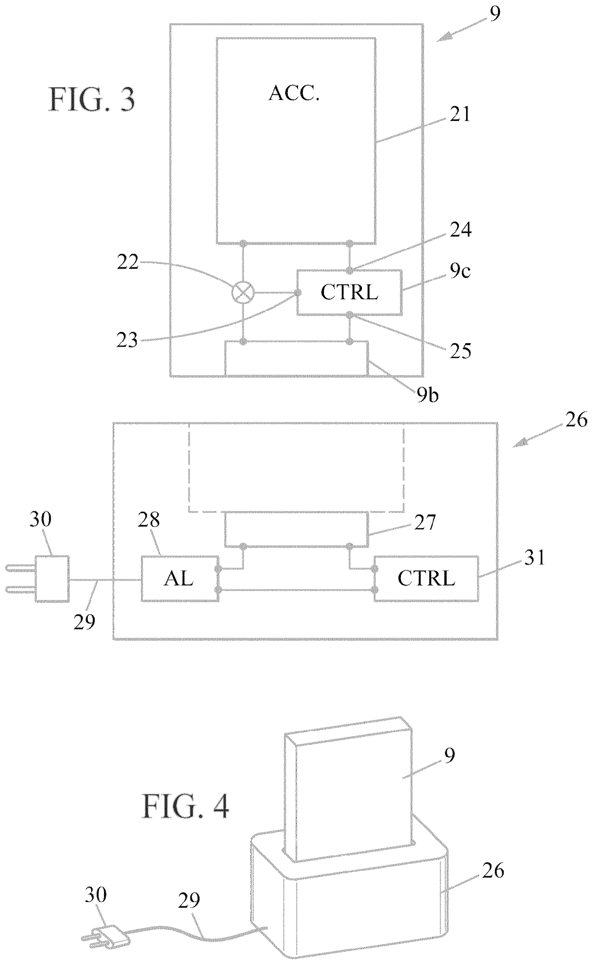

Le cycle 1 comporte classiquement un châssis composé d'un cadre porté par la roue arrière et d'une fourche surmontée du guidon et montée sur la roue avant. Comme représenté sur la figure 2, chaque cycle 1 peut être un cycle à assistance électrique comportant un connecteur 9a (DOCK.) sur lequel peut se connecter une batterie électrique 9 (BATT.) amovible et rechargeable qui comporte un connecteur électrique externe 9b (figure 3) complémentaire dudit connecteur 9a.

Le connecteur 9a est relié notamment à une unité centrale électronique 10 du cycle (CPU), par exemple un contrôleur, microprocesseur ou similaire. La batterie 9 peut éventuellement comporter une unité logique 9c (CTRL) telle qu'un microcontrôleur ou microprocesseur, qui peut éventuellement avoir en mémoire un identifiant unique lisible par l'unité centrale 10 par le biais du connecteur 9a ou autrement, et l'unité centrale 10 possède également une mémoire (ou peut accéder à une mémoire) dans laquelle elle peut stocker cet identifiant unique. Eventuellement, l'identifiant unique de la batterie, s'il est prévu, pourrait être mémorisé dans un circuit d'identification spécifique lisible par l'unité centrale 10, ou autre.

La batterie comporte en outre :
- un accumulateur électrique 21 relié au connecteur externe 9b par une liaison électrique,
- et un dispositif de commutation électronique 22 disposé sur cette liaison électrique et commandé par l'unité logique 9c en fonction d'informations de commande de batterie reçues par ladite unité logique de la batterie, pour sélectivement basculer entre un état de connexion et un état de déconnexion adaptés pour respectivement permettre et interdire au connecteur électrique externe 9b de ladite batterie de décharger de l'énergie électrique. Avantageusement, le dispositif de commutation électronique coupe la liaison électrique entre l'accumulateur 21 et le connecteur externe 9b dans l'état de déconnexion, de sorte qu'il interdit alors non seulement la décharge de la batterie, mais également sa recharge.

L'unité logique 9c peut comporter par exemple :
- une sortie 23 vers le dispositif de commutation 22,
- au moins une entrée 24 reliée à l'accumulateur 21 pour recevoir par exemple une information de tension ou de charge de cet accumulateur, que ladite unité logique 9c peut mémoriser dans une mémoire interne ou externe (non représentée),
- au moins une entrée / sortie 25 reliée au connecteur 9b et permettant à l'unité logique 9c de la batterie de dialoguer avec l'unité centrale 10 du cycle par l'intermédiaire des connecteurs 9a, 9b.

La batterie 9 alimente un moteur électrique 11 (M), par exemple un moteur d'assistance électrique au pédalage qui peut être commandé par l'unité centrale 10.

Le moteur électrique 11 est relié à une des roues du cycle, par exemple la roue avant, et il peut éventuellement être du type pouvant fonctionner soit en mode moteur pour entraîner cette roue, soit en mode générateur pour se faire entraîner par ladite roue et générer un courant électrique alimentant la batterie 9.

En temps normal, le fonctionnement du moteur 11 en mode moteur ou générateur est commandé par l'unité centrale 10, en fonction d'informations qu'elle reçoit de capteurs, notamment :
- un capteur de pédalage P adapté pour détecter ou mesurer la force de pédalage d'un utilisateur sur les pédales du cycle,
- éventuellement, un capteur de freinage adapté pour détecter un actionnement des freins du cycle par l'utilisateur,
- éventuellement un tachymètre (non représenté) mesurant la vitesse du cycle.

De plus, dans l'exemple considéré ici, l'unité centrale 10 peut également être reliée à un dispositif de commande d'antivol A, par exemple un simple bouton ou un dispositif à clef dont l'actionnement, pendant un arrêt temporaire du cycle, fait commander le moteur 11 par l'unité centrale 10 pour faire fonctionner le moteur 11 en mode générateur en l'absence de la batterie 9, ce qui rend quasiment impossible l'utilisation du cycle et donc est une dissuasion contre le vol du cycle.

L'unité centrale 10 peut également commander également au moins une interface de communication 12 (COM) qui est adaptée pour communiquer avec une interface de communication similaire 13 (COM) appartenant à chaque borne de verrouillage 7. Les interfaces de communication 12, 13 peuvent être de tout type connu et fonctionner par exemple en mode filaire, par induction, par ondes radio ou autres.

L'interface de communication 13 de la borne de verrouillage 7, quant à elle, communique avec une unité centrale électronique 14 (CPU) propre à la borne de verrouillage 7 (microprocesseur, microcontrôleur ou autre), laquelle unité centrale 14 commande par ailleurs un verrou électrique 15 (LOCK - un exemple d'un tel verrou est donné par exemple dans le document EP-A-1 820 722) adapté pour verrouiller un cycle sur la borne de verrouillage 7, et communique avec au moins un capteur 16 (SENS) adapté pour détecter le verrouillage d'un cycle sur la borne de verrouillage 7, et une interface de communication 17 (COM), par exemple un MODEM adapté pour communiquer par voie filaire 6 (figure 1) ou par une liaison radio courte portée ou tout autre manière, avec une interface de communication 18 similaire (COM) appartenant à la borne interactive 2 susmentionnée.

La borne interactive 2 comporte, quant à elle, également une unité centrale électronique 19 (CPU) telle qu'un microprocesseur, microcontrôleur ou autre, qui communique avec les périphériques 3-5 susmentionnés ainsi qu'avec une interface de communication 20 (COM) telle qu'un MODEM communiquant par radio ou par voie filaire avec le serveur central 8 susmentionné.

Dans ce système, chaque utilisateur possède de préférence sa propre batterie amovible 9, qu'il conserve avec lui notamment pour la recharger lorsqu'il ne s'en sert pas sur un cycle 1. Avantageusement, cette recharge peut s'effectuer au moyen d'un chargeur électrique 26 dédié tel que par exemple celui représenté sur les figures 3 et 4, comportant un connecteur 27 complémentaire du connecteur externe 9b de la batterie.

Le chargeur 26 peut par exemple comporter une unité centrale électronique 31 (CTRL) adaptée pour communiquer, par l'intermédiaire des connecteurs 9b, 27, avec l'unité logique 9c d'une batterie 9 connectée audit chargeur.

L'unité centrale électronique 31 du chargeur peut également commander le circuit d'alimentation électrique 28 du chargeur, qui peut se raccorder au réseau électrique par l'intermédiaire d'un câble externe 29 et d'une prise électrique 30.

L'unité logique 9c de la batterie peut être adaptée pour commander le dispositif de commutation 22 de la batterie en fonction d'informations de commande de batterie échangées entre ladite unité centrale 31 du chargeur et ladite unité logique 9c de la batterie.

Par exemple, l'unité logique 9c de la batterie 9 et l'unité centrale 31 du chargeur 26 peuvent comporter des codes identiques ou complémentaires permettant de valider que la batterie correspond au chargeur. Par exemple, l'identifiant de la batterie 9 peut être lu par l'unité centrale électronique 31 du chargeur, laquelle a en mémoire des données d'identification correspondant à cet identifiant, et l'unité centrale 31 du chargeur est adaptée pour envoyer à l'unité logique 9c de la batterie des informations de commande de batterie permettant de faire basculer le dispositif de commutation 22 à l'état de connexion, lorsque l'identifiant lu par l'unité centrale 21 du chargeur correspond auxdites informations d'identification.

Si cette correspondance est validée, l'unité logique 9c de la batterie fait passer le dispositif de commutation à l'état de connexion, et le chargeur 26 alimente la batterie 9 par le connecteur externe de ladite batterie. Inversement, si cette correspondance n'est pas validée, l'unité logique 9c de la batterie fait passer ou maintient le dispositif de commutation 22 à l'état de déconnexion, de sorte que le dispositif de commutation empêche la recharge de la batterie. On peut empêcher ainsi la recharge de batteries volées, si le voleur n'a pas pu voler un chargeur compatible avec cette batterie.

Le dispositif qui vient d'être décrit fonctionne comme suit.

Lorsqu'un utilisateur souhaite emprunter un cycle 1 sur la station de stockage de cycles, il peut s'identifier par exemple sur la borne interactive 2 (au moyen d'une carte lue par le lecteur de cartes 5 de la borne interactive ou en tapant un code personnel sur le clavier 3 ou par tout autre moyen connu, après quoi la borne interactive vérifie par exemple avec le serveur 8 de gestion de location, que l'utilisateur a le droit de louer un cycle.

En variante, chaque poste de verrouillage 7 peut comporter un lecteur de carte, par exemple un lecteur de carte sans contact, sur lequel les utilisateurs abonnés peuvent faire lire une carte sans contact pour s'identifier, après quoi le poste de verrouillage en question communique avec la borne interactive 2 qui demande l'autorisation du serveur comme indiqué ci-dessus.

Selon une autre variante particulièrement avantageuse, un utilisateur abonné peut s'identifier au moyen de sa batterie amovible 9, qui lui est personnelle comme indiqué ci-dessus et dont l'identifiant est mémorisé par le serveur avec les autres données de l'abonné, dans une base de données des abonnés. Dans ce cas, il suffit à l'utilisateur, lorsqu'il arrive à la station de stockage de cycles, de connecter sa batterie personnelle 9 sur le connecteur 9a du cycle souhaité. L'unité logique 9c de la batterie communique alors son identifiant à l'unité centrale 10 du cycle, qui elle-même communique avec l'unité centrale 19 de la borne interactive 2 par l'intermédiaire de l'unité centrale 14 de la borne de verrouillage 7 sur laquelle est verrouillé le cycle. Comme expliqué précédemment, la borne interactive 2 demande alors au serveur 8 l'autorisation de libérer le cycle 1.

Dans tous les cas évoqués ci-dessus, lorsqu'il reçoit une requête de libération d'un cycle, le serveur 8 vérifie si l'utilisateur est en droit de louer un cycle et si la batterie 9 n'est pas dans une liste de batteries volées. Si la situation est normale, le serveur donne à la borne interactive 2 l'autorisation de libérer le cycle 1 et note l'heure de début de location. La borne interactive 2 commande alors la libération d'un cycle 1 de sa borne de verrouillage 7, de façon que l'utilisateur puisse le prendre et l'utiliser.

A l'inverse, si le serveur détecte que l'identifiant de la batterie 9 correspond à une batterie volée lorsqu'il reçoit une requête de libération de cycle subséquente à la connexion de la batterie 9 sur le cycle, il envoie à la borne interactive 2 un ordre de blocage de batterie, ordre qui est relayé par ladite borne interactive puis par l'unité centrale du cycle vers l'unité logique 9c de la batterie 9. L'unité centrale 9c de la batterie fait alors basculer le dispositif de commutation en état de déconnexion et le maintient définitivement ans cet état, sauf à recevoir un ordre de déblocage venant du serveur ou d'un service de maintenance des batteries. On peut ainsi neutraliser les batteries volées, ce qui est une dissuasion supplémentaire contre le vol. On notera que ce processus de blocage e batterie peut être utilisé même si l'identifiant de la batterie n'est pas utilisé pour libérer le cycle : par exemple, dans ce cas, il peut être demandé à l'utilisateur de connecter sa batterie 9 sur le cycle 1 avant de libérer le cycle, faute de quoi le cycle n'est pas libéré.

Lorsque l'utilisateur connecte sa batterie 9 sur le connecteur 9a du cycle, son dispositif de commutation est initialement à l'état de déconnexion, et l'unité logique 9c de la batterie détecte la connexion de la batterie soit directement, soit indirectement par le fait que l'unité logique 9c commence à dialoguer avec l'unité centrale 10 du cycle. Lorsque l'unité logique 9c détecte cette connexion et sous réserve qu'elle n'ait pas reçu un ordre de blocage tel qu'expliqué ci-dessus, l'unité logique 9c commande le dispositif de commutation 22 de façon à le faire basculer en état de connexion. Plus généralement, cette commande de basculement en mode de connexion du dispositif de commutation 22 peut être effectuée en fonction de toute information de commande reçue par l'unité logique 9c (détection directe de connexion de la batterie, dialogue avec l'unité centrale du cycle, ou autre).

Eventuellement, ce passage en mode de connexion peut être subordonné à la réception d'un ordre reçu de l'unité centrale 10 du cycle. Par exemple, l'unité centrale du cycle peut d'abord lire l'identifiant de la batterie, vérifier que c'est un identifiant valide puis donner l'ordre de basculement en mode de connexion.

Si le cycle 1 a été libéré par la borne de verrouillage 7, l'utilisateur peut librement l'utiliser. Lorsqu'il a terminé de l'utiliser il rend le cycle sur une station de stockage de cycle (celle où il a emprunté le cycle ou une autre) en engageant le cycle 1 sur une borne de verrouillage libre 7 de cette station. La borne interactive 2 de cette station informe alors le serveur 8 que le cycle 1 a été rendu, puis si serveur confirme que la situation est en ordre, fait verrouiller le cycle 1 sur la borne de verrouillage 7. L'utilisateur reprend alors sa batterie 9.

Lorsque l'utilisateur déconnecte sa batterie 9 du connecteur 9a du cycle (en fin d'utilisation ou même lors d'un arrêt temporaire du cycle), l'unité logique 9c de la batterie détecte cette déconnexion comme expliqué ci-dessus et commande alors le dispositif de commutation 22 de façon à le faire basculer en état de déconnexion. La batterie ne peut alors pas se décharger intempestivement, même si son connecteur externe 9 vient en contact avec un milieu conducteur. Cet avantage vaut également si le connecteur externe est protégé en tout ou partie par un volet ou bouchon ou autre lorsqu'il est déconnecté.

## Revendications

1. Système automatique de stockage de cycles comprenant :
- une pluralité de cycles électriques (1) comportant chacun un moteur électrique (11) et fonctionnant respectivement avec des batteries électriques (9) rechargeables,
- une infrastructure fixe comportant une pluralité de postes de verrouillage (7) sur lesquels peuvent se verrouiller lesdits cycles électriques (1) et au moins un dispositif de commande externe (2, 8) adapté pour sélectivement autoriser le verrouillage et le déverrouillage des cycles électriques sur lesdits postes de verrouillage,
dans lequel les batteries (9) sont amovibles et indépendantes des cycles électriques, chaque batterie comportant un connecteur électrique externe (9b),
dans lequel chaque cycle électrique (1) comporte un connecteur électrique de cycle (9a) accessible à un utilisateur pour connecter le connecteur électrique externe (9b) d'une desdites batteries (9) sur le cycle électrique et alimenter le cycle,
dans lequel la batterie (9) possède un identifiant et comporte une unité logique (9c),
dans lequel le cycle comporte une unité centrale électronique (10) qui communique avec l'unité logique (9c) de la batterie lorsque ladite batterie (9) est connectée au cycle, l'unité centrale électronique (10) du cycle communiquant avec l'infrastructure fixe au moins lorsque le cycle est verrouillé sur un poste de verrouillage (7),
**caractérisé en ce que** l'unité logique (9c) de la batterie (9) a accès audit identifiant de la batterie et est adaptée pour communiquer cet identifiant à l'unité centrale électronique (10) du cycle lorsque ladite batterie (9) est connectée au cycle, l'unité centrale électronique (10) du cycle étant adaptée pour communiquer ledit identifiant à l'infrastructure fixe lorsque ladite batterie (9) est connectée au cycle verrouillé sur un poste de verrouillage (7), **et en ce que** ladite infrastructure fixe (2, 7, 8) est adaptée pour sélectivement déverrouiller ou non le cycle électrique (1) en fonction du seul identifiant de la batterie, sans autre moyen d'identification.

2. Système selon la revendication 1, dans lequel la batterie comporte un dispositif de commutation commandé par l'unité logique (9c) de ladite batterie pour sélectivement basculer entre un état de connexion et un état de déconnexion adaptés pour respectivement permettre et interdire au connecteur électrique externe de ladite batterie de décharger de l'énergie électrique, l'unité logique (9c) de la batterie communiquant avec l'infrastructure fixe (2, 7, 8) et étant adaptée pour placer le dispositif de commutation (22) en état de déconnexion lorsqu'elle reçoit des informations de blocage de batterie en provenance de ladite infrastructure fixe.

3. Procédé pour emprunter un cycle dans un système selon la revendication 1 ou la revendication 2, dans lequel un utilisateur a sa propre batterie (9), le procédé comportant une étape de connexion de la batterie sur le cycle, une étape de communication de l'identifiant de la batterie à l'infrastructure fixe (2, 7, 8) via l'unité logique (9c) de la batterie (9) et l'unité centrale électronique (10) du cycle, et une étape de déverrouillage où ladite infrastructure fixe (2, 7, 8) déverrouille sélectivement le cycle électrique (1) en fonction du seul identifiant de la batterie, sans autre moyen d'identification.

## Patentansprüche

1. Automatisches System zum Abstellen von Fahrrädern, aufweisend:
- mehrere Elektrofahrräder (1), die jeweils einen Elektromotor (11) aufweisen und jeweils mit wiederaufladbaren elektrischen Batterien (9) betrieben werden,
- eine ortsfeste Infrastruktur, die mehrere Verriegelungssäulen (7), an welchen die Elektrofahrräder (1) verriegelt werden können, und mindestens eine externe Steuervorrichtung (2, 8) aufweist, die konfiguriert ist, um selektiv das Verriegeln und das Entriegeln der Elektrofahrräder an den Verriegelungssäulen zu erlauben,
wobei die Batterien (9) transportabel und von den Elektrofahrrädern unabhängig sind und jede Batterie einen externen elektrischen Verbinder (9b) aufweist,
wobei jedes Elektrofahrrad (1) einen elektrischen Fahrradverbinder (9a) aufweist, der für einen Benutzer zugänglich ist, um den externen elektrischen Verbinder (9b) einer der Batterien (9) an das Elektrofahrrad anzuschließen und das Fahrrad energetisch zu versorgen,
wobei die Batterie (9) einen Identifikator besitzt und eine Logikeinheit (9c) aufweist, wobei das Fahrrad eine elektronische Zentraleinheit (10) aufweist, die mit der Logikeinheit (9c) der Batterie kommuniziert, wenn die Batterie (9) an dem Fahrrad (9) angeschlossen ist, wobei die elektronische Zentraleinheit (10) des Fahrrads mit der ortsfesten Infrastruktur kommuniziert, zumindest wenn das Fahrrad an einer Verriegelungssäule (7) verriegelt ist,
**dadurch gekennzeichnet, dass** die Logikeinheit (9c) der Batterie (9) Zugriff auf den Identifikator der Batterie hat und konfiguriert ist, um der elektronischen Zentraleinheit (10) des Fahrrads diesen Identifikator mitzuteilen, wenn die Batterie (9) an dem an einer Verriegelungssäule (7) verriegelten Elektrofahrrad (1) angeschlossen ist, wobei die elektronische Zentraleinheit (10) des Fahrrads konfiguriert ist, um der ortsfesten Infrastruktur den Identifikator mitzuteilen, wenn die Batterie (9) an dem an einer Verriegelungssäule (7) verriegelten Elektrofahrrad (1) angeschlossen ist,
und dadurch, dass die ortsfeste Infrastruktur (2, 7, 8) konfiguriert ist, um das Elektrofahrrad (1) allein in Abhängigkeit von dem Identifikator der Batterie, ohne ein anderes Identifikationsmittel, selektiv zu entriegeln oder nicht.

2. System nach Anspruch 1, in welchem die Batterie eine Umschaltvorrichtung aufweist, die von der Logikeinheit (9c) gesteuert wird, um zwischen einem Verbindungszustand und einem Trennzustand zu wechseln, die konfiguriert sind, um jeweils dem externen elektrischen Verbinder der Batterie zu erlauben bzw. zu untersagen, elektrische Energie abzugeben, wobei die Logikeinheit (9c) der Batterie mit der ortsfesten Infrastruktur (2, 7, 8) kommuniziert und konfiguriert ist, um die Umschaltvorrichtung (22) in den Trennzustand zu setzen, wenn sie aus der ortsfesten Infrastruktur Informationen zum Sperren der Batterie empfängt.

3. Verfahren zum Leihen eines Fahrrads in einem System nach Anspruch 1 oder Anspruch 2, wobei ein Benutzer seine eigene Batterie (9) hat, wobei das Verfahren aufweist: einen Schritt des Anschließens der Batterie an das Fahrrad, einen Schritt des Mitteilens des Identifikators der Batterie an die ortsfeste Infrastruktur (2, 7, 8) über die Logikeinheit (9c) der Batterie (9) und die elektronische Zentraleinheit (10) des Fahrrads und einen Schritt des Entriegelns, in welchem die ortsfeste Infrastruktur (2, 7, 8) allein in Abhängigkeit von dem Identifikator der Batterie, ohne ein anderes Identifikationsmittel, das Elektrofahrrad (1) selektiv entriegelt.

## Claims

1. Automatic system for cycle storage including:
- a plurality of electric cycles (1) each comprising an electric motor (11) and operating respectively with rechargeable electric batteries (9),
- a fixed infrastructure comprising a plurality of locking positions (7) in which said electric cycles (1) can be locked and at least one external control device (2, 8) suited for selectively allowing the locking and unlocking of the electric cycles in said locking positions,
wherein the batteries (9) are removable and independent of the electric cycles, with each battery comprising an external electric connector (9b),
wherein each electric cycle (1) comprises a cycle electric connector (9a) accessible to a user for connecting the external electric connector (9b) of one of said batteries (9) to the cycle and powering the electric cycle,
wherein the battery (9) has an identifier and includes a logic unit (9c),
wherein the cycle has an electronic central unit (10) which communicates with the logic unit (9c) of the battery when said battery (9) is connected to the cycle, the electronic central unit (10) of the cycle communicating with the fixed infrastructure at least when the cycle is locked on a locking position (7),
**characterized in that** the logic unit (9c) of the battery has access to said identifier of the battery and is adapted to communicate this identifier to the electronic central unit (10) of the cycle when said battery is connected to the electric cycle (1) locked on a locking position (7), the electronic central unit (10) of the cycle being adapted to communicate said identifier to the fixed infrastructure when said battery (9) is connected to the electric cycle (1) locked on a locking position (7),
**and in that** said fixed infrastructure (2, 7, 8) is suited for selectively unlocking or not the electric cycle (1) as a function only of the identifier of the battery, without any other identification means.

2. System according to claim 1, in which the battery comprises a switching device controlled by the logic unit (9c) of said battery for selectively switching between a connected state and a disconnected state suited for respectively allowing and preventing the external electric connector of said battery from discharging electric energy, the logic unit (9c) of the battery communicating with the fixed infrastructure (2, 7, 8) and being suited for placing the switching device (22) in disconnected state when it receives battery blocking information coming from said fixed infrastructure.

3. Method for borrowing a cycle in a system according to claim 1 or claim 2, wherein a user has his own battery (9), the method including a step of connecting the battery on the cycle, a step of communicating the identifier of the battery to the fixed infrastructure (2, 7, 8) via the logic unit (9c) of the battery (9) and the electronic central unit (10) of the cycle, and a step of unlocking wherein said fixed infrastructure (2, 7, 8) selectively unlocks the electric cycle (1) as a function only of the identifier of the battery, without any other identification means.
